Europäisches Patentamt

European Patent Office

Office européen des brevets

(19)

(11) Publication number : **0 497 604 A2**

## (12) EUROPEAN PATENT APPLICATION

(21) Application number : 92300806.4

(22) Date of filing : 30.01.92

(51) Int. Cl.⁵ : **G11B 23/03, G11B 17/028, G11B 33/14**

(30) Priority : **31.01.91 JP 31808/91**

(43) Date of publication of application :
**05.08.92 Bulletin 92/32**

(84) Designated Contracting States :
**DE FR GB**

(71) Applicant : **SONY CORPORATION**
**7-35 Kitashinagawa 6-chome Shinagawa-ku**
**Tokyo 141 (JP)**

(72) Inventor : **Yoshida, Tadao, c/o Patents Division**
**Sony Corporation, 6-7-35 Kitashinagawa**
**Shinagawa-ku, Tokyo 141 (JP)**
Inventor : **Fujiie, Kazuhiko, c/o Patents**
**Division**
**Sony Corporation, 6-7-35 Kitashinagawa**
**Shinagawa-ku, Tokyo 141 (JP)**

Inventor : **Fujisawa, Hirotoshi, c/o Patents**
**Division**
**Sony Corporation, 6-7-35 Kitashinagawa**
**Shinagawa-ku, Tokyo 141 (JP)**
Inventor : **Ando, Nobuhiko, c/o Patents**
**Division**
**Sony Corporation, 6-7-35 Kitashinagawa**
**Shinagawa-ku, Tokyo 141 (JP)**
Inventor : **Mukawa, Hiroshi, c/o Patents**
**Division**
**Sony Corporation, 6-7-35 Kitashinagawa**
**Shinagawa-ku, Tokyo 141 (JP)**
Inventor : **Ikenaga, Takashi, c/o Patents**
**Division**
**Sony Corporation, 6-7-35 Kitashinagawa**
**Shinagawa-ku, Tokyo 141 (JP)**

(74) Representative : **Purvis, William Michael**
**Cameron et al**
**D. Young & Co. 10 Staple Inn**
**London WC1V 7RD (GB)**

(54) **Disc cartridge.**

(57) A disc cartridge rotatably accommodates a disc (1) and has a cartridge housing (2) which is formed with a recording/reproducing aperture (6) to expose a part of a signal recording section of the disc (1) to outside between the inner and outer peripheries of the disc (1). A leaf spring (9) is provided in the cartridge housing (2) to thrust the disc (1) accommodated in the cartridge housing (2). During non-use of the disc cartridge, the disc (1) accommodated in the cartridge housing (2) is thrust by the spring (9) so as to abut against an annular projection (8) formed around a central clamping aperture (7) of the cartridge housing (2) to close the clamping aperture (7). With the clamping aperture (7) closed by the disc (1), intrusion of dust and dirt into the disc cartridge may be prevented during non-use of the disc cartridge.

FIG. 3

EP 0 497 604 A2

The invention relates to a disc cartridge.

Such a disc cartridge may accommodate a disc capable of storing information signals, such as an optical disc or a magneto-optical disc, in a cartridge housing.

There have hitherto been proposed discs for information recording and/or reproduction, such as optical discs or magneto-optical discs. The disc may comprise a substrate the major surface of which is provided with a signal recording layer. An inner central zone of the disc is designed as a clamp region by means of which the disc is retained by a driving unit of a disc player for recording and/or reproducing information signals on or from the disc. The peripheral zone of the disc around the clamp region is designed as a signal recording region for recording and/or reproducing information signals.

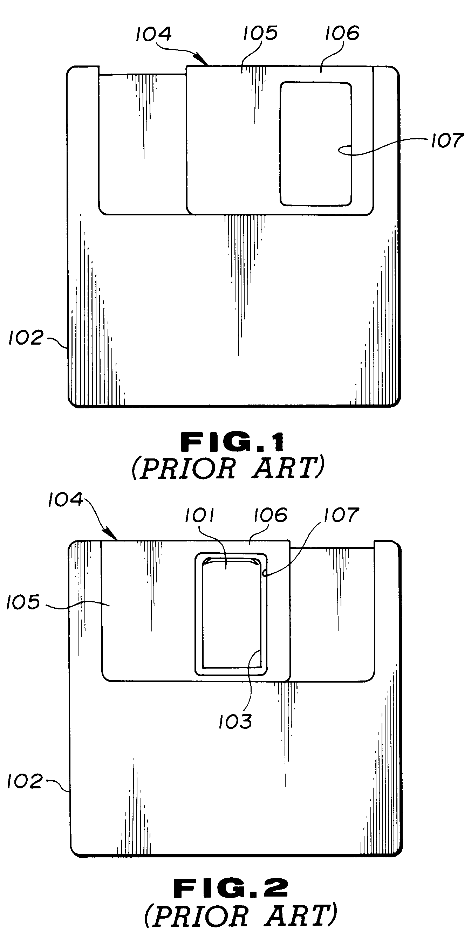

To prevent deposition of dust and dirt on the disc and damage due to contact with the users' hands or fingers, and to facilitate disc handling, in a disc cartridge of previously proposed kind as shown in Figures 1 and 2 of the accompanying drawings, a disc 101 can be accommodated in a cartridge housing 102 in the form of a casing.

In such a disc cartridge, the disc 101 accommodated in the cartridge housing 102 may be rotated within the cartridge housing 102. One major surface of the cartridge housing 102 is formed with a clamping aperture, not shown, to expose a clamping region of the disc 101 to outside, and with a recording/reproducing aperture 103 to expose at least a portion of a signal recording region of the disc 101 to outside between its inner and outer peripheries. That is, the disc 101 has its clamp region retained by a disc driving unit provided within disc recording and/or reproducing apparatus, by means of the clamping aperture, while information signals are recorded on or reproduced from the disc by a recording/reproducing head facing a signal recording section by means of the recording/reproducing aperture 103.

In the above described disc cartridge, a shutter member 104 is provided to close the recording/reproducing aperture 103 during non-use of the disc cartridge to protect the disc by preventing intrusion of dust and dirt into the cartridge housing 102. The shutter member 104 includes a shutter plate 105 of a size large enough to close the aperture 103. The shutter member 104 has an engaging portion, not shown, provided on a proximal portion or web 106, engaged with a mating engaging portion, also not shown, provided on a side edge of the cartridge housing 102, so that the shutter member is supported for movement along a side edge of the cartridge housing 102. The shutter member 104 can move between a position in which it closes the recording/reproducing aperture by means of the shutter plate 105, as shown in Figure 1, and a position in which it opens the aperture, as shown in Figure 2, and in which an aperture 107 provided in the shutter plate 105 is in register with the recording/reproducing aperture 103.

Meanwhile, when the disc cartridge is not in use, that is, when it is not loaded onto a disc player, the recording/reproducing aperture 103 is kept closed by the shutter member 104, while the clamping aperture is kept in the open state. The disc 101 is accommodated loosely in the cartridge housing 102 for rotation freely therein. That is, the cartridge housing 10 has a sufficient thickness in the direction of the thickness of the disc 101 for a gap to be defined between each inner surface of the cartridge housing 102 and each major surface of the disc 101. Thus, when the disc 101 is displaced within the cartridge housing 102, the clamping aperture is open without being hermetically closed by the disc 101. If the clamping aperture is open in this manner, dust and dirt can intrude into the cartridge housing 102 through the aperture so as to be deposited on and damage the disc 101 and interfere with normal recording and/or reproduction of the information signals. To overcome the problem arising from non-closure of the clamping aperture, it may be contemplated to close the clamping aperture simultaneously with the recording/reproducing aperture 103 by the shutter member 104. For closing not only the aperture 103 but also the clamping aperture simultaneously by the shutter member 104, it is necessary for the shutter plate 105 to be of a size large enough to close the clamping aperture and the recording/reproducing aperture 103.

If the shutter plate 105 is large enough to close the aperture 103 and the clamping aperture simultaneously, it becomes extremely difficult to produce the shutter member 104 while maintaining planarity of the shutter member 104. Above all, when the shutter member is moulded from synthetic resin, a moulding strain tends to be produced to render it more difficult to ensure complete planarity of the shutter member 104. If such moulding strain is produced in the shutter member 104 in its entirety, it becomes difficult to maintain desired dimensional accuracy in moulding. In addition, when the shutter member 104 is increased in size, the free end side of the shutter member 104 will be floated from the cartridge housing 102 when the shutter member 104 is mounted on the cartridge housing 102. Thus a retainer needs to be provided on the cartridge housing 102 to prevent floating of the shutter member 104 and thus renders it more difficult to reduce the thickness of the disc cartridge.

According to one aspect of the invention there is provided a disc cartridge comprising a cartridge housing with a disc rotatably accommodated therein, in which the cartridge housing has an aperture therein to expose a middle part of one major surface of the disc to outside and a projection formed around the perimeter of the aperture and projecting towards the inner part of the cartridge housing, and

biasing means are provided between the other major surface of the disc and an inner surface of the cartridge housing facing the other major surface of the disc,

the biasing means thrusting a central portion of the major surface of the disc in a direction to cause said one major surface of the disc to abut against the projection.

According to another aspect of the invention there is provided a disc cartridge in association with a disc having a clamping magnetic member, the disc cartridge comprising:

a cartridge housing including a disc rotatably accommodated therein and having an aperture to expose a middle part of one major surface of the disc to outside, the disc having mounted on its middle portion the clamping magnetic member,

a projection formed around the perimeter of the aperture and projecting towards the inner part of the cartridge housing, and

biasing means provided between the other major surface of the disc and an inner surface of the cartridge housing facing the other major surface of the disc,

the biasing means thrusting the clamping magnetic member in a direction to cause said one major surface of the disc to abut against the projection.

According to a still further aspect of the invention there is provided a disc cartridge in association with a disc having a chucking magnetic member, the disc cartridge comprising:

a cartridge housing including a disc rotatably accommodated therein and having an aperture to expose a middle part of one major surface of the disc to outside, the disc having mounted on its middle portion the chucking magnetic member and having an annular rib substantially concentric with a central aperture in the disc,

a projection formed around the perimeter of the aperture of the cartridge housing and projecting towards the inner part of the cartridge housing, and

biasing means provided between the other major surface of the disc and an inner surface of the cartridge housing facing the other major surface of the disc,

the projection abutting against the rib of the disc to perform a regulating movement of the disc in the cartridge housing, the biasing means thrusting the chucking magnetic member in a direction to cause said one major surface of the disc to abut against the projection.

In such a disc cartridge the clamping aperture may be hermetically closed reliably without increasing the size of the shutter member and the shutter member may be manufactured easily and with great accuracy.

A reduction in thickness can be obtained by avoiding the need for the shutter member to be increased in size.

The invention is diagrammatically illustrated by way of example in the accompanying drawings, in which:-

Figure 1 is a plan view of a conventional disc cartridge;

Figure 2 is a plan view showing the conventional disc cartridge of Figure 1, with a shutter member in a position in which an aperture of the disc cartridge is open;

Figure 3 is a longitudinal cross-sectional view showing a disc cartridge according to an embodiment of the invention;

Figure 4 is a longitudinal cross-sectional view similar to Figure 3 and showing the disc cartridge loaded into a disc recording/reproducing apparatus;

Figure 5 is an exploded perspective view of the disc cartridge shown in Figure 3;

Figure 6 is a partial longitudinal cross-sectional view showing a disc cartridge according to a modified embodiment of the invention; and

Figure 7 is a partial longitudinal cross-sectional view showing a production process for a disc cartridge shown in Figure 6.

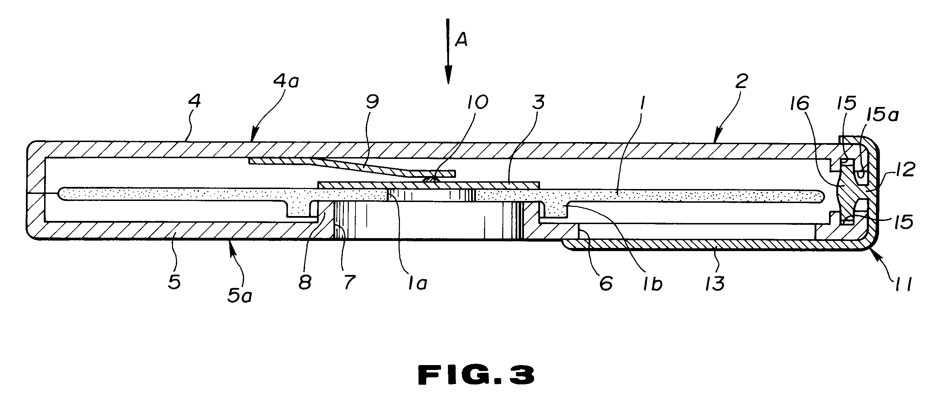

Referring to Figures 3 to 5, a disc cartridge comprises a shutter member 11 and a cartridge housing 2 accommodating a disc 1 therein. The disc 1 is an optical disc comprising a disc-shaped substrate and a signal recording layer which is formed as a thin optical recording layer on at least one major surface of the disc-shaped substrate. The central portion of the disc 1 is formed with a centering hole 1a and a disc hub 3 by means of which the disc 1 can be clamped by a disc driving unit provided in a disc player, that is, disc recording and/or reproducing apparatus which can record and/or reproduce information signals on or from the signal recording layer. A signal recording region for recording and/or reproducing information signals by the recording and/or reproducing apparatus is provided around the centering hole 1a on one major surface of the disc 1.

The centering hole 1a is a circular through-hole extending from one to the other major surface of the disc-shaped substrate and having its centre coincident the centre of curvature of a recording track or tracks formed substantially concentrically or spirally on the signal recording region. The disc hub 3 is formed of a magnetic material, such as metal, and in the form of a disc of a diameter slightly larger than the diameter of the centering hole 1a. The disc hub 3 is attached to one major surface of the disc 1 opposite to the major surface thereof carrying information signals substantially concentrically with respect to the centering hole 1a to close the centering hole 1a.

The cartridge housing 2 is formed as a thin rectangular casing comprising an upper half 4 and a lower half 5 which are abutted and connected to each other to accommodate the disc 1. Specifically, the cartridge housing 2 has upper and lower major surfaces 4a and 5a, extending parallel to the major surfaces of the disc, which are each in the form of a square having sides slightly longer than the diameter of the disc 1. The disc 1 is accommodated within the cartridge housing 2 with the major surface provided with the signal recording surface facing the lower half 5 and with the other major surface facing the upper half 4.

A signal recording/reproducing aperture 6 is provided in the lower major surface 5a of the cartridge housing 2. The recording/reproducing aperture 6 is a substantially rectangular through-hole extending from near the centre of the lower major surface 5a to near a side of the lower major surface 5a, that is to near the lateral side of the cartridge housing 2. By this recording/reproducing aperture 6, a portion of the signal recording surface formed on the major surface of the disc 1 facing the lower half 5 is exposed to outside between the inner and outer peripheries of the disc 1. Information signals may be recorded on and/or reproduced from the disc 1, by means of the recording/reproducing aperture 6, by an optical pickup device of recording and/or reproducing apparatus.

The major surface of the lower half 5 is formed with a central substantially circular clamping aperture 7. By this clamping aperture 7, the centering hole 1a and a part of the disc hub 3 are exposed to outside. The recording and/or reproducing apparatus has its disc table introduced into the cartridge housing 2 by means of the clamping aperture 7 magnetically to attract the disc hub 3 by a permanent magnet provided in the disc table for clamping the disc 1.

An annular projection 8 is provided on the perimeter of the clamping aperture 7 of the lower half 5 and extends towards the interior of the cartridge housing 2, that is towards the upper half 4. The projection 8 is formed integral with the lower half 5. An annular position-regulating rib 1b of a diameter larger than the projection 8 is provided around the projection 8 on the major surface of the disc 1 facing the lower half 5.

A leaf spring 9 functioning as elastic urging means is provided on the inner surface of the upper half 4 facing the disc 1. The leaf spring 9 has its proximal end supported by the upper half 4 and has its distal end disposed substantially at the centre of the disc 1. A lubricious member 10 is mounted at the mid portion of the disc hub 3 faced by the distal end of the leaf spring 9. The lubricious member 10 is formed of a material exhibiting low superficial frictional coefficient, or a material exhibiting self-lubricating properties, such as polytetrafluoroethylene resin, and shaped as a hemispherical member. The lubricious member 10 has its underside secured to the disc hub 3 and protrudes from the disc hub surface towards the upper half 4. The upper face of the lubricious member 10 is elastically pressed by the distal end of the leaf spring 9. The disc 1 is elastically biased towards the lower half 4 by the leaf spring 9, as shown by arrow A in Figure 3, so that a portion of the disc 1 around the centering hole 1a abuts against the upper end of the projection 8.

Referring to Figure 3 to 5, the cartridge housing 2 is provided with the shutter member 11 which can open or close the recording/reproducing aperture 6. The shutter member 11 comprises a slider portion 12 and a shutter plate portion 13 and is formed integrally of a metallic material or synthetic resin. The slider portion 12 has the shape of a letter U in cross-section, with the web of the letter U being of a width corresponding to the thickness of the cartridge housing 2. The shutter plate portion 13 is in the form of a rectangle larger in size than the recording/reproducing aperture 6 so that it can close the aperture 6 and is of a uniform thickness of the order of 0.3 mm. The shutter plate portion 13 has one of its ends supported by a lateral side of the slider portion 12. The shutter plate portion 13 is formed with an aperture 14 which may be brought into register with the recording/reproducing aperture 6.

The inner face of the slider portion 12 is formed with an engaging pawl 16 to be engaged in a pair of supporting grooves 15, 15 provided adjacent one lateral side of the cartridge housing 2. The supporting grooves 15, 15 are defined as gaps between a pair of parallel lugs formed along the inner side of each of the upper and lower halves 4 and 5 in the vicinity of said lateral side of the cartridge housing 2. Said lateral side of the disc cartridge 2 is formed with a slot 15a which extends between the supporting grooves 15, 15.

The slider portion 12 has its engaging pawl 16 projecting into the slot 15a in the cartridge housing 2 so as to be engaged with the supporting grooves 15, 15 whereby the slider portion 12 is supported by the cartridge housing 2 by having its inner surface substantially abutted against said lateral side of the cartridge housing 2. Since the engaging pawl 16 is slidable along the supporting grooves 15, 15, the slider portion 12 may be slid along said lateral side of the cartridge housing 2.

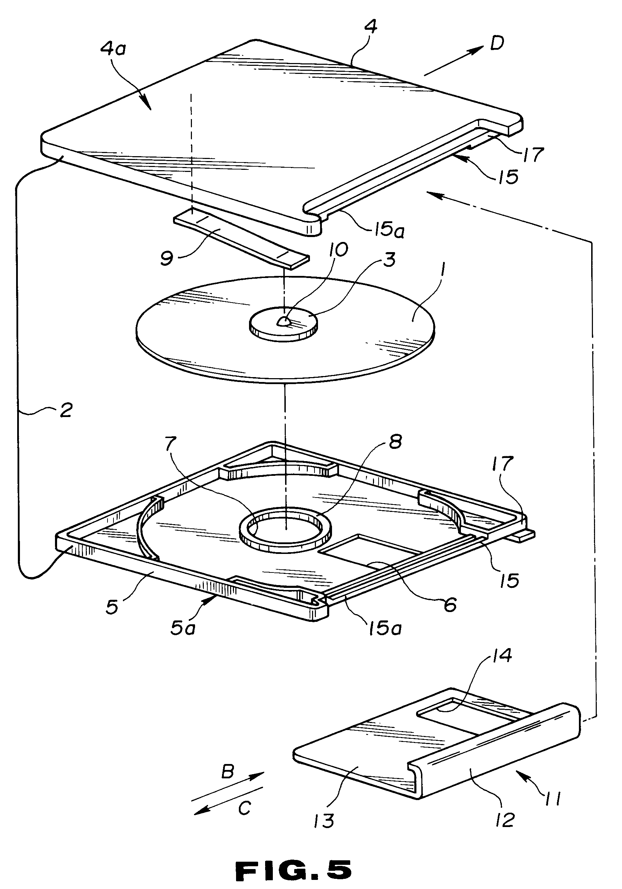

With the slider portion 12 of the shutter member 11 thus supported by the lateral side of the cartridge housing 2, the shutter member 11 is supported by the cartridge housing 2 so that the shutter plate portion 13 is disposed over the lower major surface 5a of the lower half 5. Since the slider portion 12 of the shutter member 11 may be slid relative to the cartridge housing 2, the shutter member 11 may be slid relative to the cartridge housing 2, with the shutter plate portion 13 lying over the lower major surface 5a, as shown by arrows B and C in Figure 5.

The shutter member 11 may be slid relative to the cartridge housing 2 so that the shutter plate portion 13 thereof may be brought to a position of closing the recording/reproducing aperture 6, with the aperture 6 being then out of register with the aperture 14, or to a position of opening the aperture 6, with the aperture 6 then being in register with the aperture 14.

The cartridge housing 2 is provided with a shutter opening groove 17 which is formed on said lateral side of the cartridge housing 2 extending in the direction of insertion of the disc cartridge into the recording and/or reproducing apparatus, that is in the sliding direction of the shutter member 12, as indicated by arrow $\underline{D}$ in Figure 5.

When the above disc cartridge is not in use, the recording/reproducing aperture 6 is closed by the shutter plate portion 13 of the shutter member 11 to prevent intrusion of dust and dirt or the user's finger into the cartridge housing 2 by means of the recording/reproducing aperture 6. The disc 1 also has its major surface facing the lower half 5 abutted against the annular projection 8 to close the clamping aperture 7 to prevent intrusion of dust and dirt or the user's finger through the clamping aperture 7.

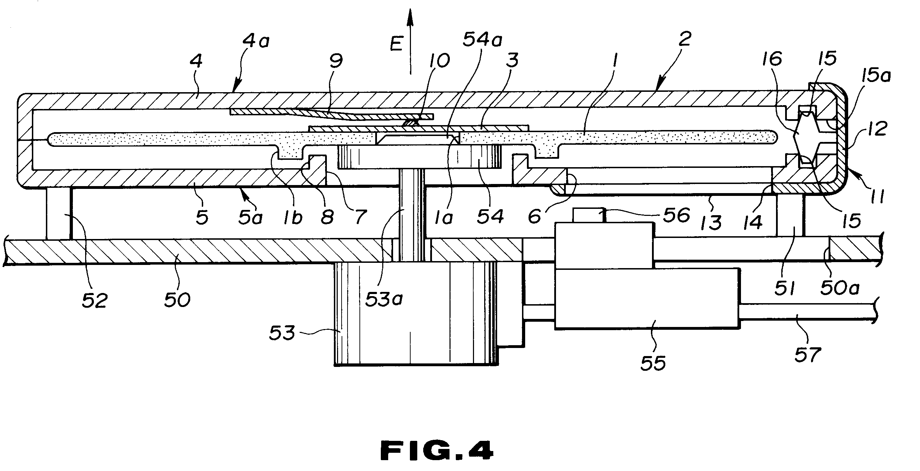

When in use, the disc cartridge is loaded on a chassis 50 of recording and/or reproducing apparatus, as shown in Figure 4. The disc cartridge is supported by the free ends of a plurality of positioning pins 51, 52 provided on the chassis 50 so as to be loaded in position on the chassis 50.

The disc 1 is engaged by a disc table 54 mounted on a driving shaft $53\underline{a}$ of a spindle motor 53 of the recording and/or reproducing apparatus. The disc table 54 is in the form of a disc smaller in diameter than the clamping aperture 7 and larger in diameter than the centering hole $1\underline{a}$ and is supported by the driving shaft $53\underline{a}$ so that the disc table is disposed above and substantially in parallel with the chassis 50. When the disc cartridge is loaded in position on the chassis 50, the disc table 54 intrudes into the disc cartridge through the clamping aperture 7. That portion of the major surface of the disc 1 facing the lower half 5 which is disposed around the centering hole $1\underline{a}$ is engaged by the upper surface of the disc table 54 thus intruded into the disc cartridge. At this time, the disc 1 is moved by the disc table 54 towards the upper half 4 away from the projection 8, with respect to the cartridge housing 2, as shown by arrow $\underline{E}$ in Figure 4.

An engaging centering portion $54\underline{a}$ is provided on the disc table 54 and is tapered inwardly from its proximal end supported by the disc table 54 towards its distal end and is of an outside diameter which can be engaged in the centering hole $1\underline{a}$ of the disc 1. The engaging centering portion $54\underline{a}$ has its centre aligned with the axis of the driving shaft $53\underline{a}$ of the spindle motor 53. A magnet, mentioned above but not shown, magnetically to attract the disc hub 3 is enclosed within the engaging centering engaging portion $54\underline{a}$.

When the disc 1 is placed on the disc table 54, the permanent magnet enclosed in the portion $54\underline{a}$ attracts the disc hub 3 so that the portion $54\underline{a}$ has its outer periphery abutted against the inner periphery of the centering hole $1\underline{a}$. With the outer periphery of the

portion $54\underline{a}$ thus abutted against the inner periphery of the centering hole $1\underline{a}$, the centre of the disc 1 is aligned with the centre of the engaging centering portion $54\underline{a}$. In this manner, the disc 1 is loaded in position on the disc table 54 by means of the engaging centering portion $54\underline{a}$ formed on the disc setting surface of the disc table 54.

The shutter member 11 is moved relative to the cartridge housing 2 by a shutter opening means, not shown, provided on the recording and/or reproducing apparatus, to open the recording/reproducing aperture 6. Information signals may now be recorded on or reproduced from the disc 1 by means of the recording/reproducing aperture 6.

With the disc cartridge thus loaded in the recording/reproducing apparatus, the disc 1 may be rotated in unison with the disc table 54 which is driven rotationally by the spindle motor 53. At this time, the disc hub 3 is rotated in unison with the disc 1. The lubricious member 10, mounted at the centre of the disc hub 3, is interposed between the disc hub 3 and the distal end of the leaf spring 9. For this reason, friction between the disc hub 3 and the leaf spring 9 is diminished so that the disc hub 3 may be rotated smoothly without obstructing the rotation of the disc 1.

In the recording and/or reproducing apparatus, information signals are recorded on or reproduced from the disc 1 by an optical pickup device 55 movably supported by a guide shaft 57 with respect to the chassis 50. The optical pickup device 55 faces the disc 1 through an aperture $50\underline{a}$ formed in the chassis 50 and is moved across between inner and outer peripheries of the disc 1 along the guide shaft 57. The optical pickup device 55 is provided with an objective lens 56, by means of which a laser beam is irradiated on the signal recording surface of the disc 1 to record and/or reproduce information signals on or from the signal recording region.

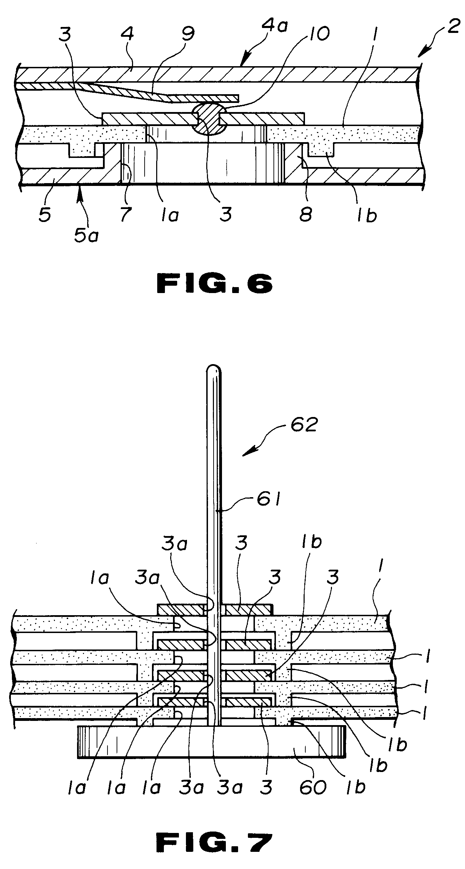

In the embodiment shown in Figure 6, the disc hub 3 is provided with a central aperture $3\underline{a}$ and the lubricious member 10 is provided to close the aperture $3\underline{a}$ and protrude on the upper surface of the disc hub 3.

As shown in Figure 7, the disc hub 3, mounted on the disc 1, is held by a disc holding jig 62 together with the disc 1. The disc holding jig 62 comprises a base block 60 and a supporting rod 61 mounted upright on the base block 60. The supporting rod 61 is of such a diameter that it can be inserted into the aperture $3\underline{a}$ of the disc hub 3. With the disc holding jig 62, a plurality of discs 1, having disc hubs 3 mounted thereon, may be held with the discs in the superimposed position, by having the supporting rod 61 introduced into the apertures $3\underline{a}$ of the superimposed discs. The disc holding jig 62 facilitates the production process of the disc because a number of discs or a number of disc hubs 3 may be held by the holding jig 62.

In the above embodiment, the lubricious member 10 is attached to the disc hub 3 after completion of the production of the disc 1 and before accommodating the disc 1 within the respective cartridge housing 2.

It is to be noted that a disc cartridge according to the invention is not limited to a construction in which a recording/reproducing aperture 6 is provided only on one of the major surfaces of the cartridge housing 2. That is, a respective recording/reproducing aperture 6 may be provided on each of the major surfaces of the cartridge housing 2. In such a case, a pair of shutter plate portions are provided in association with the recording/reproducing apertures.

It should be noted that the invention is not limited to a disc cartridge accommodating an optical disc in a cartridge housing and may be applied to a disc cartridge in which a magneto-optical disc or a magnetic disc is accommodated in a cartridge housing.

With a disc cartridge of the invention, as described above, the aperture provided in one of the major surfaces of the disc accommodating cartridge housing, and which can expose a central portion of one of the major surfaces of the disc to outside, is closed by the perimeter of the central disc portion being abutted against a rim formed around the aperture to project towards the inner part of the cartridge housing 2 by elastic biasing means provided between the disc and the inner surface of the cartridge housing 2.

In this manner intrusion of dust and dirt into the inside of the cartridge housing by means of the central aperture of the cartridge housing may be prevented during non-use of the disc cartridge.

Since, with such a disc cartridge, the central aperture formed in the cartridge housing is closed by the disc, it is unecessary to enlarge the size of the shutter member to close the aperture.

## Claims

1. A disc cartridge comprising a cartridge housing (2) with a disc (1) rotatably accommodated therein, in which the cartridge housing (2) has an aperture (7) therein to expose a middle part of one major surface of the disc (1) to outside and a projection (8) formed around the perimeter of the aperture (7) and projecting towards the inner part of the cartridge housing (2), and
   biasing means (9) are provided between the other major surface of the disc (1) and an inner surface of the cartridge housing (2) facing the other major surface of the disc (1),
   the biasing means (9) thrusting a central portion of the major surface of the disc in a direction to cause said one major surface of the disc (1) to abut against the projection (8).

2. A disc cartridge according to claim 1, wherein the biasing means comprises a plate-shaped spring (9) having one end secured to the inner surface of the cartridge housing (2) and having the other end thrusting against the disc (1) accommodated within the cartridge housing (2).

3. A disc cartridge according to claim 1, including a lubricious member (10) with the biasing means thrusting the disc (1) by way of the lubricious member (10).

4. A disc cartridge in association with a disc (1) having a clamping magnetic member (3), the disc cartridge comprising:
   a cartridge housing (2) including a disc (1) rotatably accommodated therein and having an aperture (7) to expose a middle part of one major surface of the disc (1) to outside, the disc (1) having mounted on its middle portion the clamping magnetic member (3),
   a projection (8) formed around the perimeter of the aperture (7) and projecting towards the inner part of the cartridge housing (2), and
   biasing means (9) provided between the other major surface of the disc (1) and an inner surface of the cartridge housing (2) facing the other major surface of the disc (1),
   the biasing means (9) thrusting the clamping magnetic member (3) in a direction to cause said one major surface of the disc (1) to abut against the projection (8).

5. A disc cartridge according to claim 4, wherein the biasing meana comprises a plate-shaped spring (9) having one end secured to the inner surface of the cartridge housing (2) and having the other end trusting against the clamping magnetic member (3).

6. A disc cartridge according to claim 4, including a lubricious member (10) with the biasing means (9) thrusting the disc (1) by way of the lubricious member (10).

7. A disc cartridge according to claim 6, wherein the lubricious member (10) is provided in the clamping magnetic member (3).

8. A disc cartridge in association with a disc (1) having a chucking magnetic member (3), the disc cartridge comprising:
   a cartridge housing (2) including a disc (1) rotatably accommodated therein and having an aperture (7) to expose a middle part of one major surface of the disc (1) to outside, the disc (1) having mounted on its middle portion the chucking magnetic member (3) and having an annular rib (16) substantially concentric with a central aperture (1a) in the disc (1),

a projection (8) formed around the perimeter of the aperture (7) of the cartridge housing (2) and projecting towards the inner part of the cartridge housing (2), and

biasing means (9) provided between the other major surface of the disc (1) and an inner surface of the cartridge housing (2) facing the other major surface of the disc,

the projection (8) abutting against the rib (1b) of the disc to perform a regulating movement of the disc in the cartridge housing, the biasing means (9) thrusting the chucking magnetic member (3) in a direction to cause said one major surface of the disc (1) to abut against the projection (8).

9.  A disc cartridge according to claim 8, wherein the biasing means comprises a plate-shaped spring (9) having one end secured to the inner surface of the cartridge housing (2) and having the other end thrusting the chucking magnetic member (3).

10. A disc cartridge according to claim 8, including a lubricious member (10) with the biasing means (9) thrusting the disc (1) by way of the lubricious member (10).

11. A disc cartridge according to claim 10, wherein the lubricious member (10) is provided in the disc chucking magnetic member (3).

**FIG.1**
*(PRIOR ART)*

**FIG.2**
*(PRIOR ART)*

FIG.3

**FIG.4**

EP 0 497 604 A2

**FIG. 5**

**FIG. 6**

**FIG. 7**